# EUROPEAN PATENT SPECIFICATION

(11) **EP 1 566 104 B1**
(45) Date of publication and mention of the grant of the patent: **09.07.2008**
(21) Application number: 04075532.4
(22) Date of filing: 20.02.2004
(51) Int. Cl.: A23G 1/04, A23G 1/18

(54) **Tempering apparatus with unrestricted crystallisation area**
Temperiervorrichtung mit unbeschränkter Kristallisierfläche
Appareil de conditionnement thermique ayant une surface de cristallisation illimitée

(43) Date of publication of application: 24.08.2005
(73) Proprietor: AASTED-MIKROVERK APS, 3520 Farum (DK)
(72) Inventor: Heiden, Finn, 2870 Dyssegaard (DK)
(74) Representative: Heiden, Finn

(56) References cited:
- EP-A- 0 289 849
- EP-A- 0 339 129
- EP-A- 0 394 721
- EP-A- 0 472 886
- EP-A- 0 654 222
- EP-A- 0 951 834
- EP-A- 0 997 077

## Description

The present invention concerns the technical field of apparatuses for continuous tempering of chocolate mass.

The apparatuses for continuous tempering of chocolate mass comprises a cooling stage and a reheating stage arranged thereupon as a vertical tempering column having disc-shaped chocolate chambers interconnected via chocolate channels passing through intermediary disc-shaped water chambers having an inner central wall, an outer peripheral wall, and an inlet and an outlet for cooling water arranged in the outer peripheral wall,
as well as a central shaft connected with mixing tools arranged in the chocolate chambers,
the cooling stage comprises at least two serially connected water chambers, so that the water supplied to the inlet of the uppermost water chamber of the cooling stage leaves the serial connection through the outlet of the lowermost water chamber in the cooling stage,
a chocolate temperature sensor is arranged in a chocolate channel of the uppermost water chamber of the cooling stage, which chocolate temperature sensor is connected with a control unit, which is further connected with regulation device at the inlet of the uppermost water chamber in the cooling stage, and that the control unit is adapted to control the regulation device in response to measured values of the chocolate temperature.

Before the mass is supplied to perform the actual tempering process by running continuously through the apparatus, the mass is heated to around 40-50°C in a premature step so that all the crystals in the chocolate mass are melted. The premature step could be arranged distant to the tempering apparatus or simply in the apparatus in front of the cooling stage.

During the actual tempering process in the apparatus the chocolate mass is being cooled to around 25-34°C in the cooling stage so that crystals are created. Then the mass is reheated around 0,5-2,0°C in the reheating stage for melting out most of the in-stable crystals in the mass, however then preserving a content of stable β-crystals which melts at a higher temperature than the in-stable crystals. The stable crystals are preserved in the mass ready for depositing in an amount of typically 0,01% - 5%, preferably in an amount of 0,1% - 2%.

Generally, chocolate mass encompasses all types of suspensions of non-fat particles such as sugar, milk powders and cocoa solids mixed up with a liquid fat constituent which are capable of crystallizing. When it comes to pure chocolate mass, the fat phase comprises genuine cocoa butter of until around 30%, but may comprise substitutes as well. Such substitutes can be in the form of other types of fat-containing oils. Chocolate types where the cocoa butter has been replaced wholly or partly by other fats are often named commercially as compound chocolate, in which the cocoa butter has been replaced by palm-kernel oil. Mass made of 100% fat in the form of cocoa butter or the like as compound is also possible.

However, for the tempering to be performed, it is decisive, that whether the fat phase constitutes of genuine cocoa butter or substitutes therefore, the fat phase must be capable of crystallizing into stable crystal types, such as the β-crystals developing in genuine cocoa butter when the mass solidifies. Only then eatable chocolate articles with good taste and shiny appearance are created.

After having passed through the tempering apparatus the chocolate mass is typically deposited into moulds or deposited on top of pre-made articles. By the industrial scale continuous process typically between 1000 and 100.000 articles are moulded per hour. Decisive for obtaining an even quality of the chocolate articles in relation to taste and appearance are dominantly the content and type of crystals in the mass solidified. Optimal is when the type of crystals are stable BetaV crystals only and that the content thereof in the ready tempered chocolate mass is at the desired preset content between 0.1 and 1.0% - however being constant - for example of 0.35% for a specific production. Only then the manufacturer can rely on that the quality of his chocolate products are always the same.

EP 0 289 849 A2 (SOLLICH) discloses an apparatus of the above kind by which the regulation device is adapted to regulate the temperature of the cooling water in response to the measured chocolate temperature. Then when the throughput of chocolate through the apparatus falls the cooling requirement is reduced and the regulation device controls a surplus of water so that the temperature of the water supplied to the cooling chambers are raises. However, then the temperature of the cooling water rises so high, i.e. above 18°C whereby the temperature of the surfaces of the chocolate chamber rises as well so high, that essentially no crystals can be performed at the surfaces of the chocolate chambers.

Furthermore, the cooling water chambers of this prior disclosure are open without any restrictions or partitioning walls, so that the forcefully supplied water intermixes instantly with turbulent flow in the chambers. Then, the temperature of the water in the water chambers are constant so that the temperature over the disc-shaped wall between the water chamber and the chocolate chamber is essentially constant as well. The temperature of the disc-shaped cooling surface of the chocolate chamber is then constant as well so that when the cooling requirement is high and the temperature sufficient low for crystals to create at the surface the crystallisation area constitutes the full disc-shaped and is not adapted to the instantaneous requirement. When the cooling requirement reduces the temperature of the disc-shaped area rises at a certain point above the temperature of 18°C so that no crystals at all are created at the surface.

Decisive is, that it has been observed, that when the water is supplied in reasonable amounts typically sufficient for creating a turbulent flow, the crystals performs at water temperatures and consequently also surface temperatures below 18°C. When the temperatures are above 18°C essentially no crystals performs when the mass passes over the cooling surface.

EP 0 654 222 (AASTED-MIKROVERK) discloses another tempering apparatus by which the cooling stage is divided into a first and a second separate cooling stage each controlled by its own separate cooling circuit. The crystallisation exclusively takes place in the second cooling stage.

The temperature of the water supplied to the first cooling stage is controlled in response to the mass temperature so that the temperature of the cooling chambers rises or falls in response to the actual cooling requirement.

The temperature of the cooling water supplied to the water chambers of the second cooling stage is constant and the supply is controlled in response to the actual requirement, however only within that second cooling stage.

When the production of chocolate articles in a certain production plant becomes more and more successful the number of articles produced per hour and by the plant is increased and consequently also the amount of chocolate run through the tempering apparatus per hour. Then the complete surface of the second cooling stage creates crystals all the time. Furthermore as the temperature of the chambers of the first cooling stage falls in response to the required higher cooling amount it becomes so low that crystals are created in the first stage as well. The amount of crystals created is then never constant any longer however varies unpredictably.

Also tempering apparatuses are also known by which is aimed at constructions which secures an even temperature over the complete disc-shaped cooling surface of a chamber. Such an example is also known from EP 0 997 077 by which the cooling water channel within a chamber where warmer parts of the channel returns to be arranged beside much colder parts of the channel so that a non-progressive course is disclosed securing that the interaction between colder and much warmer parts of the channel provides an even temperature all over the chamber and then all over the cooling surface. The temperature of the final cooling chamber is then below or above 18°C at all parts of the disc-shaped cooling surface and crystallisation is restricted to within that surface.

The present inventive tempering apparatus is characterised in, that the regulation device is adapted to regulate the flow of the cooling water which is delivered with a temperature below 18°C, and that each water chamber comprises a single water channel which at least over the major part of the disc-shaped chamber surface has a continuously progressing course from inlet towards outlet.

The combination of the water temperature being below 18°C at the inlet and the continuously progressing course of the channel secures that the incoming water is protected from being temperature neutralized with the warmer return water running to the outlet. A safe cooled area in the chamber having a temperature below 18°C is then always created, so that it is secured, that a safe crystallisation area is created extending from the inlet and somewhat into the continuous channel to a certain extent depending on the flow of cooling water supplied regulated in response to the actual cooling requirement. The extension of the crystallisation area is free to float within all the serially connected water chambers. This means that the free float within the uppermost cooling chamber can proceed unrestricted to within the next lower water chamber and so on when the water flow is increased in response to higher and higher cooling requirements.

Then it is secured, that a safe crystallisation area is created which can extend from the upper inlet and anywhere into the continuous channel irrespective of the connections between the individual water chambers depending on the flow of cooling water supplied and regulated in response to the actual cooling requirement.

The crystallisation area can then increase without any restriction when a greater throughput of mass is pumped through the tempering apparatus and requires a larger crystallisation area so that the percentage of stable beta V crystals created in the mass is constant independently of the amount of mass tempered per hour.

Important is, that the first part of the continuous channel extending from the inlet and to the certain point at which the temperature exceeds 18°C is not arranged adjacent or beside the remaining major part of the channel towards the outlet to such extent that the temperature of the surface is interfered and equalized.

The controlled crystallisation area is then fully adaptable to the instantaneous requirement and is free to extend from one chamber into the next connected chamber when necessary. The point in the channel where the temperature exceeds 18°C simply progresses into the next connected water chamber. Then it is always secured that the crystallisation area is fully adaptable to the instantaneous requirement independently of how high the amount of mass run through the tempering apparatus pro hour is. The important result achieved is, that a constant percentage of crystals is created in the mass independently of the amount run through the apparatus. Then the quality of the chocolate is fully predictable and is even also when the amount of articles produced in a plant is gradually increased. The evidence of this is, that the so-called tempering curves are identical at all capacities run through the apparatus.

In its simplest form the continuous channel extends with a 360° curve from inlet to outlet as a radially extending partitioning wall, the one end of which is connected to the outer peripheral wall and the other end of which is connected to the inner central wall of the chamber is arranged. A highly effective channel is then created by a very simple building-wise.

The invention is further described by referral to the drawing, in which
figure 1 schematically discloses a tempering apparatus according to the invention,
figure 2 and figure 3 schematically discloses two other embodiments of the cooling water supplies to the uppermost cooling chamber,
figure 4 schematically discloses a cooling water channel with the progressive course through the elements as well as temperature curves for the water running through the cooling stage,
figure 5 discloses a first embodiment of a cooling water chamber,
figure 6 discloses a second embodiment of a cooling water chamber,
figure 7 discloses a third embodiment of a cooling water chamber,
figure 8 discloses a fourth embodiment of a cooling water chamber, and
figure 9 discloses yet another embodiment of partitioning plates configuring the cooling channels of a cooling chamber.

The apparatus 1 for continuous tempering of chocolate mass comprises a cooling stage 2 and a reheating stage 3 arranged thereupon as a vertical tempering column 4. The tempering column 4 comprises disc-shaped chocolate chambers 5 interconnected via chocolate channels 6 passing through intermediary disc-shaped water chambers 7.

The water chambers 7 have an inner central wall 8, an outer peripheral wall 9, and an inlet 10 and an outlet 11 for cooling water arranged in the outer peripheral wall 9.

A central shaft 12 is arranged in the column 4 connected with non-disclosed common mixing tools arranged in the chocolate chambers 5. The shaft is driven by a gearmotor 13.

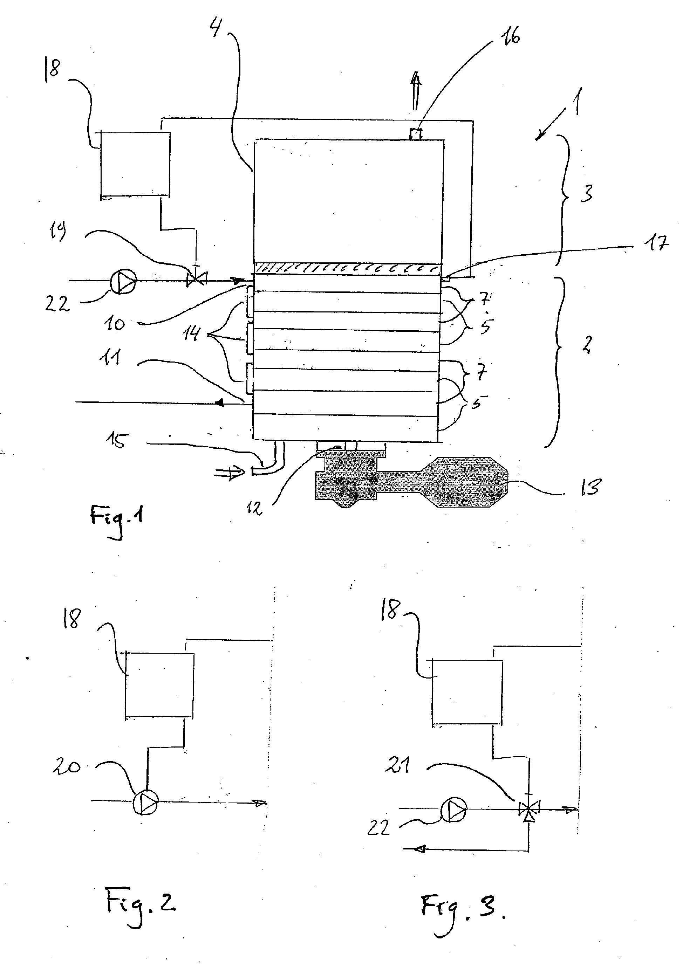

The cooling stage 2 comprises at least two serially connected water chambers 7 by the embodiment disclosed in figure 1 four water chambers 7. The outlet 11 of each uppermost water chamber 7 in the column 4 is connected by a tube part 14 with the inlet 10 of the next lower water chamber 7 in the column 4.

The water supplied to the inlet 10 of the uppermost water chamber of the cooling stage leaves the serial connection through the outlet 11 of the lowermost water chamber 7 in the cooling stage 2.

The chocolate is pumped to the chocolate inlet 15 of the column 4 and leaves the apparatus in a tempered state at the chocolate outlet 16.

A chocolate temperature sensor 17 is arranged in a chocolate channel of the uppermost water chamber of the cooling stage, which chocolate temperature sensor 17 is connected with a control unit 18.

The control unit 18 can be any type of known control unit such as a programmable PLC unit. The control unit 18 is further connected with a regulation device 19 at the inlet 10 of the uppermost water chamber 7 in the cooling stage 2.

In fig. 1 the regulation device is disclosed as a valve such as an on-off valve or a solenoid valve. In figures 2 and 3 are disclosed other embodiments of the regulation device as a frequency controlled pump 20 or a three-way valve 21, respectively. The regulation device could be any kind of regulatory device inserted in a liquid tube as long as it is capable of being able to control the water flow in response to the signals from the control unit 18 as the control unit18 is adapted to control the regulation device in response to measured values of the chocolate temperature received from the chocolate sensor 17. A water pump 22 typically supplies the cooling water to the inlet 10.

The regulation device, i.e. the valve 19 in figure 1, is adapted to regulate the flow of the cooling water which is delivered with a temperature below 18°C so that a temperature below 18°C of the cooling chamber surfaces neighbouring the chocolate chamber is achievable. Then will stable Beta V crystals create on the cooled chamber surface 23.

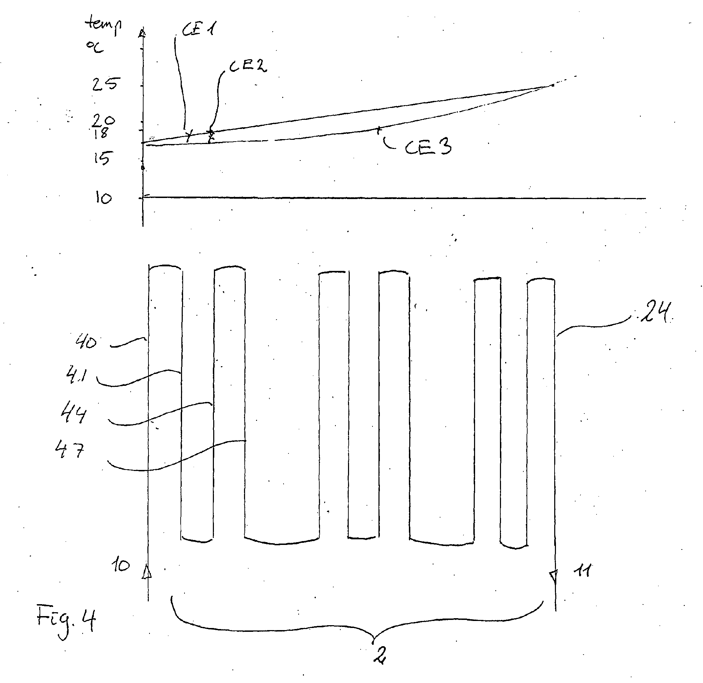

Each water chamber 7 comprises a single water channel 24, which at least over the major part of the disc-shaped chamber surface has a continuously progressing course from inlet 10 towards outlet 11. This is schematically depicted in fig. 4.

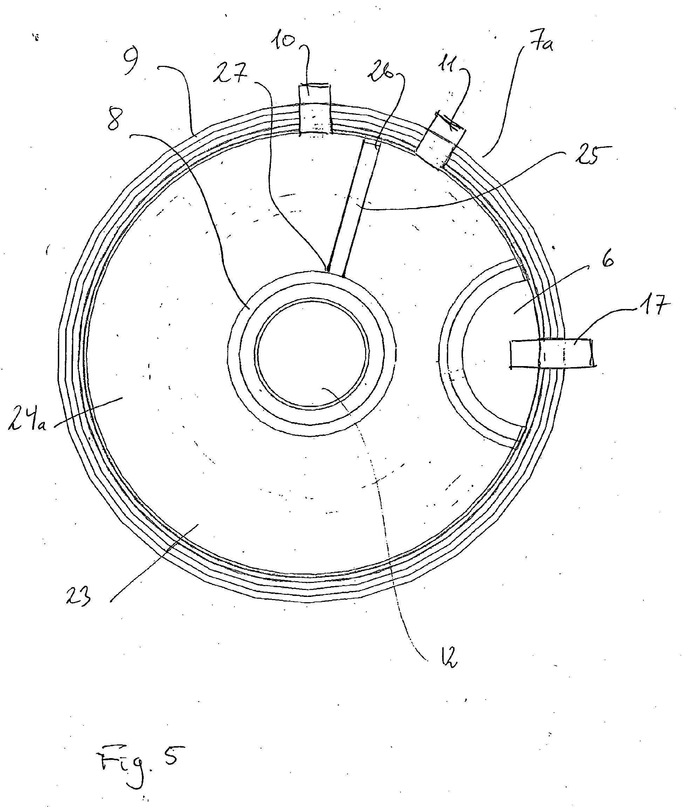

By the embodiment of the cooling water chamber 7a disclosed in figure 5 the water channel has the continuously progressing course 24a of a 360° turn by which a radially extending wall 25 separates inlet 10 from outlet 11. The one end 26 of the wall 25 is connected to the outer peripheral wall 9 and the other end 27 is connected to the inner central wall 8.

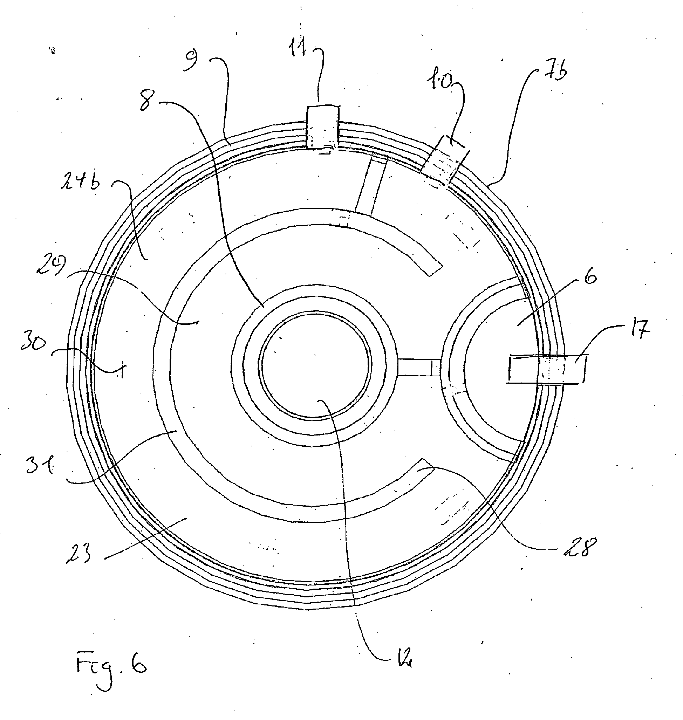

By the embodiment of the cooling water chamber 7b disclosed in figure 6 the water channel has the continuously progressing course 24b with one deflection point 28 between a first channel part 29 and a concentrically arranged second channel part 30 being parted by a curved partitioning wall 31.

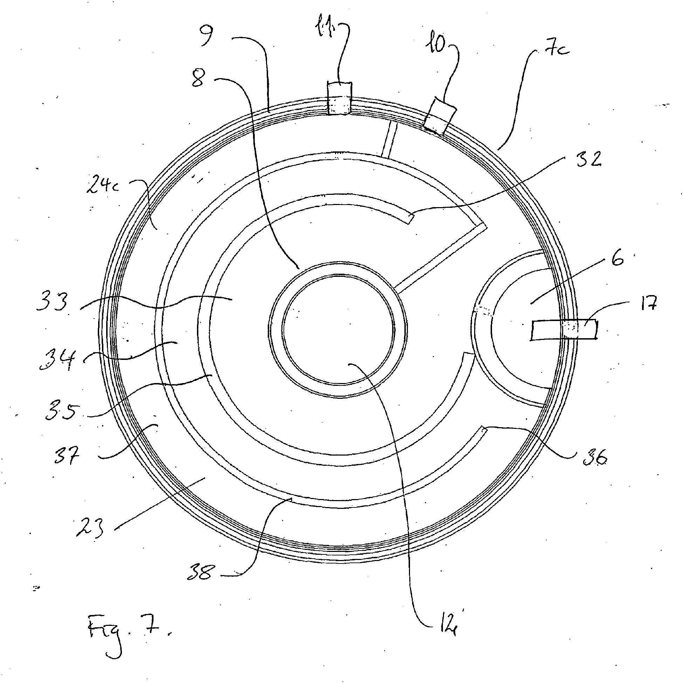

By the embodiment of the cooling water chamber 7c disclosed in figure 7 the water channel has the continuously progressing course 24c with one deflection point 32 between a first channel part 33 and a second channel part 34 being parted by a curved partitioning wall 35. The channel has a further deflection point 36 between the second channel part 34 and a concentrically arranged third neighbouring channel part 37 being parted by a second curved partitioning wall 38.

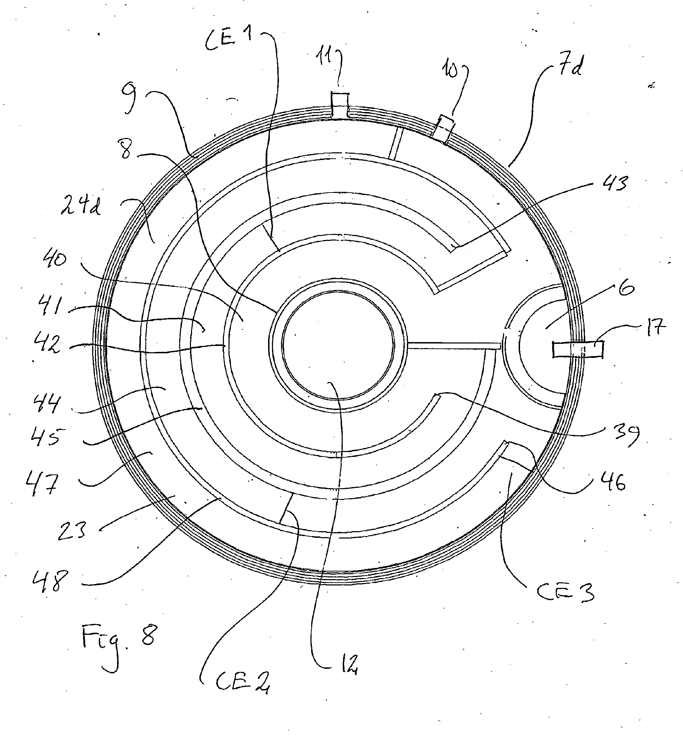

By the embodiment of the cooling water chamber 7d disclosed in figure 8 the water channel has the continuously progressing course 24d with one deflection point 39 between a first channel part 40 and a second channel part 41 being parted by a curved partitioning wall 42. The channel has a further deflection point 43 between the second channel part 41 and a third neighbouring, concentrically arranged channel part 44 being parted by a second curved partitioning wall 45.
The channel has an even further 180° deflection point 46 between the third channel part 44 and a fourth concentrically arranged channel part 47 being parted by a third curved partitioning wall 48.

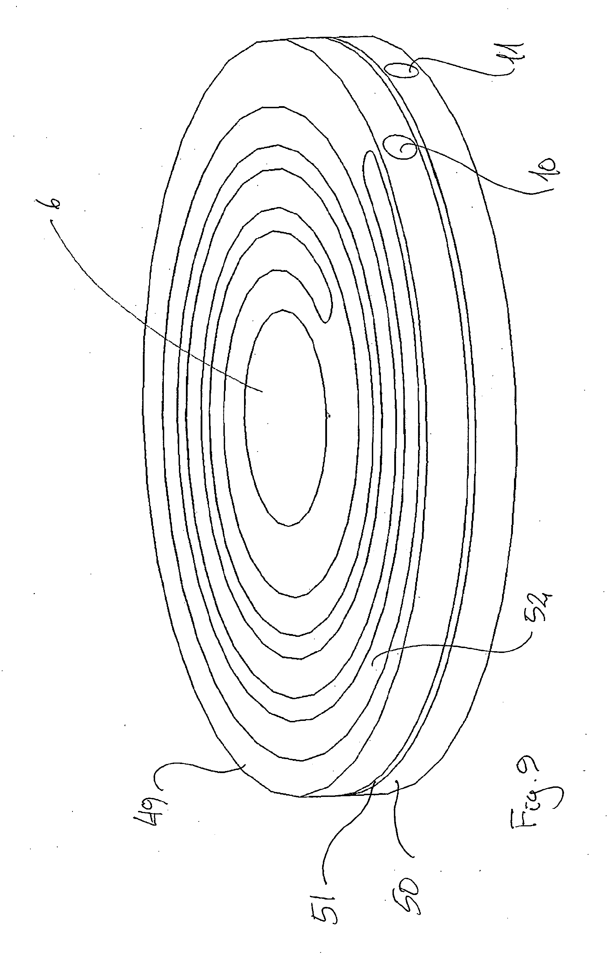

An even further embodiment is disclosed in figure 9 of two inserts discs 49 and 50 with an intermediary insulation disc 51. A spiral shaped channel 52 is formed in each disc 49 and 50 which may be identical. The inserts 49 and 50 and the intermediary insulation disc 51 is then arranged in a water chamber free from other partitioning walls.

The invention is described further by referring to figures 1, 4 and 8. The combination of the water temperature being below 18°C at the inlet 10 and the continuously progressing course of the channel 24 as schematically depicted in figure 4 secures that the incoming water is protected from being temperature neutralized with the warmer return water running to the lowest outlet 11.

A safe cooled area in the chamber having a temperature below 18°C is then always created within this area crystals are created. Outside the area the chocolate is predominantly cooled down in temperature.

When applying the water chambers 7d of figure 8 in the tempering column 4 of figure 1 the continuous water channel 24 could be schematically depicted as in figure 4 extending between the upper inlet 10 and the lowermost outlet 11 in the cooling stage 2.

Then it is secured, that a safe crystallisation area is created which can extend from the upper inlet 10 and anywhere into the continuous channel irrespective of the connections between the individual water chambers depending on the flow of cooling water supplied and regulated in response to the actual cooling requirement.

The crystallisation area can then increase without any restriction when a greater throughput of mass is pumped through the tempering apparatus and requires a larger crystallisation area so that the percentage of stable beta V crystals created in the mass is constant independently of the amount of mass tempered per hour.

Important is, that the first part of the continuous channel extending from the inlet and to the certain point at which the temperature exceeds 18°C is not arranged adjacent or beside the remaining major part of the channel towards the outlet to such extent that the temperature of the surface is interfered and equalized. Other types of tempering machines have arranged the channels in the water chambers so that channel parts having much higher temperature is always arranged beside channel parts having lower temperature so that the temperature of the cooled disc-shaped surface is even. The course of the channel is non-progressive as it several times is returned against the inlet position. These arrangements are outside the inventive idea.

The controlled crystallisation area 53, which in figure 8 is depicted schematically is then fully adaptable to the instantaneous requirement and is free to extend from one chamber into the next connected chamber when necessary, i.e. when the throughput of chocolate mass is increased.

By a first example around 500 kg chocolate is tempered pro hour. The boundary point of 18°C then is CE1 as depicted in figure 4 and figure 8. The throughput of mass is then increased to 750 kg of chocolate per hour as more articles per hour has to be manufactured and the boundary point of the crystallisation area in the channel 24 then progresses to CE2 as the control unit in response to mass temperatures measured increases the water flow supplied by the valve 19 to the inlet 10.

Then by a further example the throughput of mass is increased to 1300 kg per hour and the increased water flow progresses the boundary point of the crystallisation area even further in the channel 24 into the next underlying water chamber 7d in which the boundary point progresses to CE3 depicted in figure 4 and 8.

The point in the channel where the temperature exceeds 18°C simply progresses into the next connected water chamber. Then it is always secured that the crystallisation area is fully adaptable to the instantaneous requirement independently of how high the amount of mass run through the tempering apparatus pro hour is.

The important result achieved is, that a constant percentage of crystals is created in the mass independently of the amount run through the apparatus. Then, the quality of the chocolate is fully predictable even when the amount of articles produced in a plant is gradually increased. The evidence of this is, that the so-called tempering curves are identical at all capacities run through the apparatus.

## Claims

1. Apparatus (1) for continuous tempering of chocolate mass comprising a cooling stage (2) and a reheating stage (3) arranged thereupon as a vertical tempering column (4) having disc-shaped chocolate chambers (5) interconnected via chocolate channels (6) passing through intermediary disc-shaped water chambers (7, 7a-d) having an inner central wall (8), an outer peripheral wall (9), and an inlet (10) and an outlet (11) for cooling water arranged in the outer peripheral wall (9), as well as a central shaft (12) connected with mixing tools arranged in the chocolate chambers (5),
the cooling stage (2) comprising least two serially connected water chambers (7, 7a-d), so that the water supplied to the inlet (10) of the uppermost water chamber (7, 7a-d) of the cooling stage (2) leaves the serial connection through the outlet (11) of the lowermost water chamber in the cooling stage (2),
a chocolate temperature sensor (17) being arranged in a chocolate channel (6) of the uppermost water chamber (7, 7a-d) of the cooling stage (2), which chocolate temperature sensor (17) is connected with a control unit (18),
which is further connected with regulation device (19; 20; 21) at the inlet (10) of the uppermost water chamber in the cooling stage (2), and the control unit (18) being adapted to control the regulation device (19; 20; 21) in response to measured values of the chocolate temperature,
**characterised in,**
**that** the regulation device (18) is adapted to regulate the flow of the cooling water which is delivered with a temperature below 18°C, and that each water chamber (7, 7a-d) comprises a single water channel (24, 24a-d) which at least over the major part of the disc-shaped chamber surface has a continuously progressing course from inlet (10) towards outlet (11).

2. Apparatus according to claim 1, **characterised in, that** the control unit (18) is adapted to control the regulation device (19; 20; 21) in response to measured values of the chocolate temperature, so that when the mass temperature rises the regulation device is controlled to provide a greater supply of water flow to the inlet (10), and when the mass temperature falls the regulation device is controlled to provide a smaller supply of water flow to the inlet.

3. Apparatus according to claim 1, **characterised in, that** a water chamber (7b) has a radially extending partitioning wall (25), the one end (26) of which is connected to the outer peripheral wall (9) and the other end (26) of which is connected to the inner central wall (8) of the chamber (7b).

4. Apparatus according to claim 1, **characterised in, that** the water channel (24b) has at least one 180° deflection point (28) between a first channel part (29) and a second neighbouring channel part (30) being parted by a curved partitioning wall (31).

5. Apparatus according to claim 4, **characterised in, that** the channel (24c) has a further 180° deflection point (36) between the second channel part (34) and a third neighbouring channel part (37) being parted by a second curved partitioning wall (38).

6. Apparatus according to claim 5, **characterised in, that** the channel (24d) has an even further 180° deflection point (46) between the third channel part (44) and a fourth neighbouring channel part (47) being parted by a third curved partitioning wall (48).

7. Apparatus according to one of the claims 4-6, **characterised in, that** the channel parts between the 180° deflection points and arranged concentrically within each others.

8. Apparatus according to claim 1, **characterised in, that** the channel (52) has a spiralformed progression from the inlet to the central wall in the chamber.

9. Apparatus according to claim 1, **characterised in, that** the channel (52) has a spiralformed progression from the central wall and to the outlet.

10. Apparatus according to claim 1, **characterised in, that** an upper and a lower spiralformed progression of the channel is parted by a disc-shaped partitioning plate (51) having insulating characteristics.

11. Apparatus according to claim 1, **characterised in, that** the water flow regulation device is a valve (19).

12. Apparatus according to claim 1, **characterised in, that** the water flow regulation device is a valve (21) with by-pass.

13. Apparatus according to claim 1, **characterised in, that** the water flow regulation device is a pump (20).

## Patentansprüche

1. Vorrichtung (1) zur kontinuierlichen Temperierung von Schokoladenmasse, umfassend
eine Kühlstufe (2) und eine darauf vertikal angebrachte und als Temperiersäule (4) wirkende Rückführungsstufe (3) mit lamellenförmigen Schokoladenkammern (5), die mittels Schokoladenkanälen (6) miteinander verbunden sind, welche wiederum durch zwischenliegende lamellenförmige Wasserkammern (7, 7a-d) laufen und die eine innen liegende Innenwand (8) sowie eine außen liegende periphere Wand (9) sowie einen Einlass (10) und einen Auslass (11) für Kühlwasser in der außen liegenden periphere Wand (9) haben, sowie eine zentrale Welle (12), die mit den in den Schokoladenkammern (5) befindlichen Rührwerkzeugen verbunden ist,
wobei die Kühlstufe (2) mindestens zwei in Serie miteinander verbundene Wasserkammern (7, 7a-d) umfasst, sodass das am Einlass (10) der am höchsten gelegenen Wasserkammer (7, 7a-d) der Kühlstufe (2) zugeführte Wasser die in Serie miteinander verbundenen Kammern am Auslass (11) der am niedrigsten gelegenen Wasserkammer der Kühlstufe (2) verlässt,
einem Schokoladentemperaturfühler (17), der sich in einem Schokoladenkanal (6) der am höchsten gelegenen Wasserkammer (7, 7a-d) der Kühlstufe (2) befindet, wobei der Schokoladentemperaturfühler (17) mit einer Steuereinheit (18) verbunden ist,
die wiederum an eine Regelvorrichtung (19; 20; 21) am Einlass (10) der am höchsten gelegenen Wasserkammer in der Kühlstufe (2) angeschlossen ist und wobei die Steuereinheit (18) so ausgelegt ist, dass diese die Regelvorrichtung (19; 20; 21) entsprechend der gemessenen Schokoladentemperaturen regelt,
**dadurch gekennzeichnet,**
**dass** die Regelvorrichtung (18) so angepasst ist, dass diese den Fluss des Kühlwassers regelt, das mit einer Temperatur von unter 18° C zugeführt wird, und dass jede Wasserkammer (7, 7a-d) jeweils einen Wasserkanal (24, 24a-d) beinhaltet, der mindestens über dem überwiegenden Teil der Oberfläche der lamellenförmigen Kammer einen kontinuierlichen Fluss vom Einlass (10) zum Auslass (11) aufweist.

2. Vorrichtung entsprechend dem Anspruch 1, die **dadurch gekennzeichnet ist, dass** die Steuereinheit (18) so angepasst ist, die Regelvorrichtung (19; 20; 21) in Abhängigkeit der gemessenen Schokoladentemperaturen zu regeln, sodass die Regelvorrichtung bei einem Anstieg der Massentemperatur so geregelt wird, dass ein höherer Wasserzufluss an den Einlass (10) erfolgt, und bei einem Anstieg der Temperatur so geregelt wird, dass ein geringerer Wasserzufluss an den Einlass erfolgt.

3. Vorrichtung entsprechend dem Anspruch 1, **dadurch gekennzeichnet, dass** die Wasserkammer (7b) eine sich radial ausdehnende Trennwand (25) besitzt, von welcher das eine Ende (26) mit der außen liegenden peripheren Wand (9) und das andere Ende (26) mit der in der Mitte befindlichen Innenwand (8) der Kammer (7b) verbunden ist.

4. Vorrichtung entsprechend dem Anspruch 1, **dadurch gekennzeichnet, dass** der Wasserkanal (24b) mindestens einen 180° Wendepunkt (28) zwischen einer ersten Kanalstrecke (29) und einer zweiten Kanalstrecke (30) besitzt, die von einer gewölbten Trennwand (31) voneinander getrennt sind.

5. Vorrichtung entsprechend dem Anspruch 4, **dadurch gekennzeichnet, dass** der Wasserkanal (24c) einen weiteren 180° Wendepunkt (36) zwischen der zweiten Kanalstrecke (34) und einer dritten benachbarten Kanalstrecke (37) besitzt, die von einer zweiten gewölbten Trennwand (38) voneinander getrennt sind.

6. Vorrichtung entsprechend dem Anspruch 5, **dadurch gekennzeichnet, dass** der Wasserkanal (24d) noch einen weiteren 180° Wendepunkt (46) zwischen der dritten Kanalstrecke (44) und einer vierten benachbarten Kanalstrecke (47) besitzt, die von einer dritten gewölbten Trennwand (48) voneinander getrennt sind.

7. Vorrichtung mit einem der Ansprüche 4-6, **dadurch gekennzeichnet, dass** die Kanalstrecken zwischen den 180° Wendepunkten konzentrisch zueinander verlaufen.

8. Vorrichtung entsprechend dem Anspruch 1, **dadurch gekennzeichnet, dass** der Kanal (52) vom Einlass zur Mittelwand in der Kammer einen spiralförmigen Verlauf hat.

9. Vorrichtung entsprechend dem Anspruch 1, **dadurch gekennzeichnet, dass** der Kanal (52) von der Mittelwand zum Auslass einen spiralförmigen Verlauf hat.

10. Vorrichtung entsprechend dem Anspruch 1, **dadurch gekennzeichnet, dass** ein oberer und unterer spiralförmiger Verlauf des Kanals durch eine isolierende scheibenförmige Trennplatte (51) getrennt werden.

11. Vorrichtung entsprechend dem Anspruch 1, **dadurch gekennzeichnet, dass** die Wasserdurchflussregelvorrichtung ein Ventil (19) ist.

12. Vorrichtung entsprechend dem Anspruch 1, **dadurch gekennzeichnet, dass** die Wasserdurchflussregelvorrichtung ein Ventil (21) mit Bypass ist.

13. Vorrichtung entsprechend dem Anspruch 1, **dadurch gekennzeichnet, dass** die Wasserdurchflussregelvorrichtung eine Pumpe (20) ist.

## Revendications

1. Appareil (1) pour le tempérage continu d'une masse de chocolat, qui comprend un étage de refroidissement (2) et un étage de réchauffage (3) disposés de sorte à former une colonne de tempérage verticale (4) comprenant des chambres à chocolat (5) en forme de disques reliées entre elles par des canaux à chocolat (6) traversant les chambres à eau intermédiaires en forme de disques (7, 7a à d) comprenant une paroi centrale intérieure (8), une paroi périphérique extérieure (9) et une entrée (10) et une sortie (11) pour l'eau de refroidissement aménagées dans la paroi périphérique extérieure (9), ainsi qu'un arbre central (12) relié à des outils mélangeurs disposés dans les chambres à chocolat (5),
l'étage de refroidissement (2) comprenant au moins deux chambres à eau reliées en série (7, 7a à d), de sorte que l'eau fournie à l'entrée (10) de la chambre à eau supérieure (7, 7a à d) à l'étage de refroidissement (2) quitte le raccord en série via la sortie (11) de la chambre à eau inférieure à l'étage de refroidissement (2),
un capteur de température de chocolat (17) étant disposé dans un canal à chocolat (6) de la chambre à eau supérieure (7, 7a à d) à l'étage de refroidissement (2), lequel capteur de température de chocolat (17) est relié à une unité de commande (18),
laquelle est reliée à son tour à un régulateur (19, 20, 21) à l'entrée (10) de la chambre à eau supérieure à l'étage de refroidissement (2), l'unité de commande (18) étant adaptée pour contrôler le régulateur (19,20,21) en réponse à des valeurs mesurées de la température du chocolat,
**caractérisé en ce**
**que** le régulateur (18) est adapté pour réguler le débit de l'eau de refroidissement fournie à une température inférieure à 18 °C et que chaque chambre à eau (7, 7a à d) comprend un simple canal à eau (24, 24a à d) qui, au moins sur la majeure partie de la surface de la chambre en forme de disque, présente une progression continue de l'entrée (10) vers la sortie (11).

2. Appareil selon la revendication 1 **caractérisé en ce que** l'unité de commande (18) est adaptée pour contrôler le régulateur (19, 20, 21) en réponse à des valeurs mesurées de la température du chocolat, de sorte que lorsque la température de la masse augmente, le régulateur est contrôlé de façon à augmenter le débit d'eau en direction de l'entrée (10), et que lorsque la température de la masse chute, le régulateur est contrôlé de façon à réduire le débit d'eau en direction de l'entrée.

3. Appareil selon la revendication 1 **caractérisé en ce qu'**une chambre à eau (7b) possède une paroi de séparation radialement étendue (25), dont l'une des extrémités (26) est reliée à la paroi périphérique extérieure (9) et l'autre extrémité (26) à la paroi centrale intérieure (8) de la chambre (7b).

4. Appareil selon la revendication 1 **caractérisé en ce que** le canal à eau (24b) comprend au moins un point de déviation à 180° (28) entre une première section de canal (29) et une deuxième section de canal adjacente (30), séparées par une paroi de séparation courbée (31).

5. Appareil selon la revendication 4 **caractérisé en ce que** le canal (24c) comprend un point de déviation à 180° (36) supplémentaire entre la deuxième section de canal (34) et une troisième section de canal adjacente (37), séparées par une deuxième paroi de séparation courbée (38).

6. Appareil selon la revendication 5 **caractérisé en ce que** le canal (24d) comprend un autre point de déviation à 180° (46) supplémentaire entre la troisième section de canal (44) et une quatrième section de canal adjacente (47), séparées par une troisième paroi de séparation courbée (48).

7. Appareil selon l'une des revendications 4 à 6 **caractérisé en ce que** les sections de canal entre les points de déviation à 180° sont disposées concentriquement les unes par rapport aux autres.

8. Appareil selon la revendication 1 **caractérisé en ce que** le canal (52) présente une progression en forme de spirale depuis l'entrée vers la paroi centrale de la chambre.

9. Appareil selon la revendication 1 **caractérisé en ce que** le canal (52) présente une progression en forme de spirale depuis la paroi centrale vers la sortie.

10. Appareil selon la revendication 1 **caractérisé en ce qu'**une progression supérieure et une progression inférieure en forme de spirale du canal sont séparées par une plaque de séparation en forme de disque (51) présentant des caractéristiques isolantes.

11. Appareil selon la revendication 1 **caractérisé en ce que** le régulateur du débit d'eau est une vanne (19).

12. Appareil selon la revendication 1 **caractérisé en ce que** le régulateur du débit d'eau est une vanne (21) à dérivation.

13. Appareil selon la revendication 1 **caractérisé en ce que** le régulateur du débit d'eau est une pompe (20).
